Europäisches Patentamt

European Patent Office

Office européen des brevets

(19)

(11) Numéro de publication: **0 239 557**
**B1**

(12) **FASCICULE DE BREVET EUROPEEN**

(45) Date de publication du fascicule du brevet:
23.05.90

(51) Int. Cl.⁵: **B01J 29/04, C01B 33/18**

(21) Numéro de dépôt: 87870011.1

(22) Date de dépôt: 23.01.87

(54) Procédé d'halogénation de catalyseurs de type TEA-silicate.

(30) Priorité: 29.01.86 LU 86279

(43) Date de publication de la demande:
30.09.87 Bulletin 87/40

(45) Mention de la délivrance du brevet:
23.05.90 Bulletin 90/21

(84) Etats contractants désignés:
AT BE CH DE ES FR GB IT LI NL SE

(56) Documents cités:
EP-A- 0 002 079
EP-A- 0 137 289
EP-A- 0 201 856
GB-A- 2 144 447
US-A- 3 691 255
US-A- 4 361 713

(73) Titulaire: FINA RESEARCH S.A., Zone Industrielle C,
B-6520 Seneffe(BE)

(72) Inventeur: Debras, Guy L.G., 176 avenue Joseph Abras,
B-5001 Belgrade(BE)
Inventeur: Cahen, Raymond M., 21 avenue Commandant
Lothaire, B-1040 Bruxelles(BE)
Inventeur: De Clippeleir, Georges E.M.J., 5 Petrus
Huysegomstraat, B-1600 Sint-Pieters-Leeuw(BE)

(74) Mandataire: Leyder, Francis, c/o Fina Research S.A.
Zone industrielle C, B-6520 Feluy(BE)

**Description**

La présente invention se rapporte à un procédé pour stabiliser les catalyseurs de type TEA-silicate.

Plus particulièrement, la présente invention concerne un procédé pour stabiliser les catalyseurs de silice cristalline de type TEA-silicate, pour notamment les utiliser dans des procédés catalytiques sous pression.

La présente invention se rapporte également aux catalyseurs de type TEA-silicate stabilisés obtenus par le procédé de l'invention, en vue de les utiliser dans les procédés de traitement catalytique sous pression.

Les catalyseurs de type TEA-silicate sont relativement stables lorsqu'ils sont utilisés dans des procédés de traitement catalytique qui se déroulent à la pression atmosphérique.

On a déjà utilisé le TEA-silicate dans des procédés comme l'hydrogénation, l'aromatisation, l'alkylation, et plus généralement la conversion des hydrocarbures.

Il est généralement intéressant de réaliser ces procédés à des pressions plus élevées que la pression atmosphérique.

Il serait donc intéressant de pouvoir disposer d'un procédé pour stabiliser le TEA-silicate en vue de son utilisation dans des procédés de traitement catalytique à pression élevée.

La présente invention a donc pour objet un tel procédé pour stabiliser le TEA-silicate.

La présente invention a également pour objet un procédé pour stabiliser le TEA-silicate en l'halogénant avec un dérivé chloré, un dérivé bromé ou encore un dérivé fluoré.

La présente invention a également pour objet les TEA-silicates halogénés obtenus par le procédé ci-dessus.

Le procédé de la présente invention pour stabiliser la silice cristalline de type TEA-silicate est caractérisé en ce qu'il consiste à :

a) halogéner ce TEA-silicate en le mettant en contact avec un courant gazeux comprenant :
(i) un agent d'halogénation choisi dans le groupe comprenant les composés organiques aliphatiques chlorés saturés, les composés organiques aliphatiques bromés saturés, les composés organiques fluorés saturés et leurs mélanges, ayant une tension de vapeur d'au moins 13 kPa à une température de 200 à 230°C et ayant une faible teneur en hydrogène; et
(ii) un véhiculeur gazeux non-réducteur; à une température comprise entre 200 et 500°C et pendant une période de temps suffisante pour fixer de 0,1 à 1 % en poids d'halogène sur le TEA-silicate;
b) récupérer ou utiliser le TEA-silicate halogéné et stabilisé ainsi formé.

Dans le procédé de l'invention, on utilise un TEA-silicate, c'est-à-dire une silice cristalline qui n'a pas de capacité d'échange par comparaison aux zéolithes. L'aluminium peut être présent dans ces catalyseurs, mais uniquement sous forme d'impuretés provenant des produits de départ et notamment de la source de silice utilisée. Les méthodes pour obtenir ces TEA-silicates sont données dans le brevet US 4.104.294 de Grose et Flanigen.

Les TEA-silicates sont des matériaux microporeux préparés hydrothermiquement et utilisant un mélange réactionnel comprenant des cations tétraéthylammonium, des cations de métaux alcalins, de l'eau et une source de silice réactive.

Ainsi, le TEA-silicate est un type distinct de catalyseur synthétisé à partir de systèmes de réactions essentiellement exempts de réactif contenant de l'aluminium et qui sont par conséquent entièrement exempts de tétraèdre $AlO_4^-$ ou qui ne contiennent pas, cristallographiquement, des quantités significatives de ces tétraèdres. Le TEA-silicate est décrit dans le brevet US 4.104.294. Il s'agit d'organosilicates métalliques cristallins préparés à partir d'un système $R_2O$:0 - 8,0 / $M_2O$: 12 - 40 / $SiO_2$ amorphe: 100 - 500 / $H_2O$, où R représente le cation TEA ou tétraéthylammonium et M est le cation d'un métal alcalin. Il est indiqué que le TEA-silicate contient seulement le groupement organique dans sa forme synthétisée, car les parties organiques sont éliminées par calcination avant l'utilisation comme catalyseur de conversion d'hydrocarbures.

Le TEA-silicate utilisé dans le procédé de la présente invention peut être caractérisé comme des organosilicates cristallins microporeux qui sont préparés hydrothermiquement en utilisant un mélange réactionnel comprenant des cations tétraéthylammonium, des cations de métaux alcalins, de l'eau et une source de silice réactive. Différents des zéolites cristallines, qui sont des aluminosilicates comprenant des réseaux tridimensionnels de tétraèdres $SiO_4$ et $AlO_4$, joints entre eux par les atomes d'oxygène, les organosilicates cristallins utilisés dans le procédé de la présente invention sont synthétisés à partir de systèmes réactionnels qui sont essentiellement exempts de réactifs contenant de l'aluminium. Ces TEA-silicates peuvent être préparés selon les méthodes décrites dans le brevet US 4.104.294. La teneur en aluminium de ces composés peut varier selon la quantité d'aluminium contenue comme impureté dans les matériaux de départ. Par exemple, le catalyseur TEA-silicate particulier utilisé dans le procédé de la présente invention peut avoir une teneur en aluminium légère ment plus élevée que celle qui est décrite dans le brevet US 4.104.294 due aux impuretés d'aluminium dans les produits de départ et notamment la silice amorphe solide utilisée pour sa préparation.

Ces catalyseurs sont hydrophobes et organophiles, ils absorbent le néopentane, ce qui suppose une ouverture de pore plus grande qu'environ 6,2 Å (0,62 mm).

Selon le procédé de l'invention, on effectue la stabilisation du TEA-silicate en l'halogénant à une température comprise entre environ 200°C et environ 500°C, et de préférence comprise entre environ 250°C et environ 300°C lorsque l'on utilise des agents chlorés ou bromés, et de préférence entre 450 et 500°C lorsque l'on utilise des agents fluorés.

On réalise l'halogénation du TEA-silicate par mise en contact avec un courant gazeux comprenant l'agent halogénant et un véhiculeur gazeux non-réducteur. On a trouvé que ce traitement doit être réalisé dans des conditions spécifiques de façon à obtenir des catalyseurs stabilisés et halogénés qui sont actifs pendant de longues périodes de temps lorsqu'ils sont utilisés dans ces procédés sous pression.

L'une des conditions réside dans le choix de l'agent halogénant. Cet agent est de préférence un composé organique aliphatique saturé chloré, bromé ou fluoré volatil, ayant une tension de vapeur d'au moins 13kPa à une température d'environ 200 à 230°C. Il est préférable d'utiliser un composé halogéné ayant une tension de vapeur d'environ 40 à 53 kPa ou même plus dans cet intervalle de températures.

Comme agent halogénant actif, on peut citer des composés halogénés ayant un rapport halogène/carbone égal ou supérieur à 1, contenant de 1 à 4 atomes de carbone et pouvant contenir de l'oxygène. Comme agents halogénants particulièrement appropriés pour produire les catalyseurs de la présente invention, on peut citer les paraffines halogénées contenant de 1 à 4 atomes de carbone et les éthers halogénés contenant de 2 à 4 atomes de carbone et qui répondent aux conditions indiquées ci-dessus du point de vue volatilité et nombre d'atomes d'halogène. A titre d'exemples typiques de paraffines halogénées, on peut citer le tétrachlorure, le tétrabromure, ou les tétrafluorure de carbone, le chloroforme, le bromoforme, le fluoroforme, l'hexachloroéthane et le pentachloroéthane, ainsi que $CH_2F_2$. Comme autres agents halogénants, on peut encore citer le di-trichlorométhyl éther, le di-pentachloroéthyl éther et leurs homologues bromés.

Parmi les composés cités ci-dessus, le tétrachlorure de carbone et le di-trichlorométhyl éther sont particulièrement appropriés comme agents halogénants, alors que le chlore et le brome moléculaire ainsi que le chlorure d'hydrogène ou le bromure d'hydrogène sont moins efficaces.

Le véhiculeur gazeux non-réducteur que l'on peut utiliser est généralement l'azote, le dioxyde de carbone, l'oxygène ou leurs mélanges.

La quantité totale d'agent halogénant qui doit être utilisée ainsi que le temps de contact avec le TEA-silicate sont également réglés de façon à produire des catalyseurs contenant environ 0,1 à environ 5 % en poids de chlore et/ou de brome et/ou de fluor. Le temps de contact nécessaire dépend de nombreux facteurs comme le nombre d'atomes d'halogène dans l'agent halogénant et la concentration en agent halogénant dans le flux gazeux ou la tension de vapeur de cet agent. En général, il est compris entre ¼ et 96 heures, plus particulièrement entre 1 et 12 heures. La teneur préférée en halogène du catalyseur dépend de nombreux facteurs. Par exemple, dans la majorité des cas, l'activité du catalyseur est d'autant plus élevée que la teneur en halogène est grande.

Cependant, on a constaté que dans la plupart des cas, il était plus intéressant d'avoir une teneur en halogène comprise entre 0,1 et 1 % en poids.

Si le catalyseur n'est pas produit in situ dans le réacteur destiné à la réalisation du procédé sous pression, on décharge alors le catalyseur halogéné du réacteur d'halogénation et on l'introduit dans des récipients de stockage.

Les catalyseurs préparés selon le procédé de l'invention peuvent être produits sous n'importe quelle forme connue, comme par exemple sous forme de granules, poudre, billes ou autres similaires.

On a constaté que les catayseurs halogénés préparés selon le procédé de l'invention étaient particulièrement adaptés pour être utilisés dans des procédés de conversion d'hydrocarbures, comme par exemple l'isomérisation ou la dimérisation d'oléfines, le réformage ou l'aromatisation de charges paraffiniques, lorsque ces procédés sont conduits sous pression élevée notamment comprise entre $2.10^5$ et $7.10^6$Pa, et surtout lorsque l'on introduit de la vapeur d'eau en même temps que la charge, comme cela est décrit dans une autre demande de brevet EP-A 0 240 480 déposée le même jour au nom de la Demanderesse, et intitulée "Procédé de traitement catalytique".

On a constaté que l'activité des TEA-silicates stabilisés et halogénés était maintenue sur une beaucoup plus longue période lorsque la quantité de vapeur d'eau introduite était telle que le rapport molaire eau/charge est compris entre 0,5 et 1,5.

Si, malgré la stabilisation fournie par le procédé de la présente invention, on désire régénérer un catalyseur du type TEA-silicate halogéné comme décrit ci-dessus, on peut le régénérer selon des techniques bien connues de l'homme de l'art, en brûlant les produits hydrocarbonés qui s'y sont accumulés par exemple en les calcinant à des températures comprises entre 450°C et 550°C en présence d'azote contenant des teneurs progressivement croissantes en oxygène, jusqu'à ce que la teneur en $CO_2$ dans le gaz effluent soit inférieure à 0,1 % en volume.

Les exemples suivants sont donnés afin de mieux illustrer la présente invention, mais sans pour autant en limiter la portée.

Exemple

On a chargé dans un réacteur du TEA-silicate que l'on a chauffé à 500°C pendant 3 heures sous un courant d'azote ayant une vitesse spatiale horaire gazeuse (GHSV) de 500 (ml/ml). On a refroidi à 278°C en maintenant le débit d'azote, puis on a saturé pendant 110 minutes l'azote envoyé vers le réacteur avec du $CCl_4$.

Sur le TEA-silicate ainsi chloré, contenant 0,4 % en poids de chlore, on a fait passer, à une température de 380°C, sous une pression de $15.10^5$Pa et avec une LHSV de 30, une charge ayant la composition suivante :

| 53,3% (en poids) | de n-butènes |
|---|---|
| 1,2 | d'isobutène |
| 44,6 | de butanes |
| 0,9 | d'hydrocarbures plus légers |

ainsi que de la vapeur d'eau dans un rapport molaire eau/charge de 0,7/1.

On a obtenu les valeurs suivantes (exprimées en % poids) pour la conversion des n-butènes et la sélectivité en essences (hydrocarbures ayant une température d'ébullition comprise entre 36 et 200°C), et on a calculé le rendement en essences (= conversion x sélectivité):

| | | conversion | sélectivité | rendement |
|---|---|---|---|---|
| après | 9 heures | 93,3% | 84,4% | 78,7% |
| | 25 heures | 89,0% | 85,1% | 75,7% |
| | 59 heures | 85,6% | 85,1% | 72,8% |
| | 83 heures | 84,2% | 83,6% | 70,4% |

Exemple comparatif

On a fait passer la même charge que dans l'exemple, ainsi que de la vapeur d'eau dans un rapport molaire eau/charge égal à 0,74, sur du TEA-silicate non traité, à une température de 380°C, sous une pression de $15.10^5$Pa et avec une LHSV de 30.

On a obtenu les résultats suivants (% en poids):

| | | conversion des n-butènes | sélectivité en essences | rendement en essences |
|---|---|---|---|---|
| après | 9 heures | 88,4% | 86,8% | 76,7% |
| | 27 heures | 74,5% | 84,3% | 62,8% |
| | 51 heures | 55,3% | 85,6% | 47,3% |
| | 75 heures | 42,7% | 86,2% | 36,8% |

**Revendications**

1. Procédé pour stabiliser l'activité de la silice cristalline polymorphe de type TEA-silicate utilisée comme catalyseur de conversion des hydrocarbures, caractérisé en ce qu'il consiste à:
    a) halogéner cette TEA-silicate en la mettant en contact avec un courant gazeux comprenant
        (i) un agent d'halogénation choisi dans le groupe comprenant les composés organiques aliphatiques chlorés saturés, les composés organiques aliphatiques bromés saturés, les composés organiques fluorés saturés, et leurs mélanges, ayant une tension de vapeur d'au moins 13 kPa à une température de 200 à 230°C et ayant un rapport atomique halogène/carbone égal ou supérieur à 1 et
        (ii) un véhiculeur gazeux non-réducteur, à une température comprise entre 200 et 500°C et pendant une période de temps suffisante pour fixer de 0,1 à 5% en poids d'halogène sur la TEA-silicate;
    b) récupérer ou utiliser la TEA-silicate halogénée et stabilisée ainsi formée.
2. Procédé selon la revendication 1, caractérisé en ce que l'agent d'halogénation est choisi dans le groupe comprenant les composés organiques aliphatiques chlorés saturés, les composés organiques aliphatiques bromés saturés et leurs mélanges.

3. Procédé selon la revendication 2, caractérisé en ce que l'on réalise l'halogénation à une température comprise entre 250 et 300°C.

4. Procédé selon la revendication 1, caractérisé en ce que l'agent d'halogénation est choisi parmi les composés organiques aliphatiques fluorés saturés et leurs mélanges.

5. Procédé selon la revendication 4, caractérisé en ce que l'on réalise l'halogénation à une température comprise entre 450 et 500°C.

6. Procédé selon l'une des revendications 1 à 5, caractérisé en ce que l'agent d'halogénation a une tension de vapeur supérieure à 40 kPa à une température de 200 à 230°C.

7. Procédé selon la revendication 6, caractérisé en ce que l'agent d'halogénation a une tension de vapeur comprise entre 40 et 53 kPa à une température de 200 à 230°C.

8. Procédé selon l'une des revendications 1 à 7, caractérisé en ce que l'agent d'halogénation est choisi parmi les paraffines halogénées contenant de 1 à 4 atomes de carbone, et leurs mélanges.

9. Procédé selon l'une des revendications 1 à 8, caractérisé en ce que l'agent d'halogénation est choisi dans le groupe comprenant le tétrachlorure, le tétrabromure et le tétrafluorure de carbone, le chloroforme, le bromoforme, le fluoroforme, l'hexachloroéthane, le pentachloroéthane et le difluorométhane.

10. Procédé selon l'une des revendications 1 à 7, caractérisé en ce que l'agent d'halogénation est choisi parmi les éthers halogénés contenant de 2 à 4 atomes de carbone, et leurs mélanges.

11. Procédé selon la revendication 10, caractérisé en ce que l'agent halogénant est choisi parmi le di-pentachloroéthyl éther, le di-tri-chlorométhyl éther, leurs homologues bromés, et leurs mélanges.

12. Procédé selon l'une quelconque des revendications 1 à 11, caractérisé en ce que le véhiculeur gazeux non-réducteur est choisi parmi l'azote, le dioxyde de carbone, l'oxygène et leurs mélanges.

13. Procédé selon l'une quelconque des revendications 1 à 12, caractérisé en ce que la mise en contact a lieu pendant une période de temps suffisante pour fixer de 0,1 à 1% en poids d'halogène sur la TEA-silicate.

14. Silice cristalline polymorphe de type TEA-silicate pour catalyser la conversion des hydrocarbures, caractérisée en ce qu'elle est stabilisée à l'aide du procédé selon l'une quelconque des revendications 1 à 13.

## Patentansprüche

1. Verfahren zur Stabilisierung von kristallinem, polymorphem Siliciumdioxid vom TEA-Silicat-Typ, das als Katalysator zur Umwandlung von Kohlenwasserstoffen verwendet wird, dadurch gekennzeichnet, daß es aus folgenden Schritten besteht:

a) Halogenieren des TEA-Silicats, indem man es in Kontakt mit einem Gasstrom bringt, der folgende Bestandteile enthält:

(i) ein Halogenierungsmittel, das aus der Gruppe organische, aliphatische, chlorierte, gesättigte Verbindungen, organische, aliphatische, bromierte, gesättigte Verbindungen, organische, fluorierte, gesättigte Verbindungen und deren Gemische ausgewählt ist, bei 200 bis 230°C einen Dampfdruck von mindestens 13 kPA aufweist und ein Atomverhältnis Halogen/Kohlenstoff von mehr als 1 aufweist; und

(ii) einen nicht-reduzierenden, gasförmigen Träger;

bei einer Temperatur zwischen 200 und 500°C und für eine ausreichende Zeitspanne, um 0,1 bis 5 Gew.-% Halogen am TEA-Silicat zu fixieren;

b) Gewinnen oder Verwenden des auf diese Weise gebildeten halogenierten und stabilisierten TEA-Silicats.

2. Verfahren nach Anspruch 1, dadurch gekennzeichnet, daß das Halogenierungsmittel aus der Gruppe organische, aliphatische, chlorierte, gesättigte Verbindungen, organische, aliphatische, bromierte, gesättigte Verbindungen und deren Gemische ausgewählt ist.

3. Verfahren nach Anspruch 2, dadurch gekennzeichnet, daß man die Halogenierung bei einer Temperatur zwischen 250 und 300°C durchführt.

4. Verfahren nach Anspruch 1, dadurch gekennzeichnet, daß das Halogenierungsmittel unter organischen, aliphatischen, fluorierten, gesättigten Verbindungen und deren Gemischen ausgewählt ist.

5. Verfahren nach Anspruch 4, dadurch gekennzeichnet, daß man die Halogenierung bei einer Temperatur zwischen 450 und 500°C durchführt.

6. Verfahren nach einem der Ansprüche 1 bis 5, dadurch gekennzeichnet, daß das Halogenierungsmittel bei einer Temperatur von 200 bis 230°C einen Dampfdruck von mehr als 40 kPa aufweist.

7. Verfahren nach Anspruch 6, dadurch gekennzeichnet, daß das Halogenierungsmittel bei einer Temperatur von 200 bis 230°C einen Dampfdruck zwischen 40 und 53 kPa aufweist.

8. Verfahren nach einem der Ansprüche 1 bis 7, dadurch gekennzeichnet, daß das Halogenierungsmittel unter halogenierten Paraffinen mit einem Gehalt an 1 bis 4 Kohlenstoffatomen und deren Gemischen ausgewählt ist.

9. Verfahren nach einem der Ansprüche 1 bis 8, dadurch gekennzeichnet, daß das Halogenierungsmittel aus der Gruppe Tetrachlor-, Tetrabrom- und Tetrafluorkohlenstoff, Chloroform, Bromoform, Fluoroform, Hexachlorethan, Pentachlorethan und Difluormethan ausgewählt ist.

10. Verfahren nach einem der Ansprüche 1 bis 7, dadurch gekennzeichnet, daß das Halogenierungsmittel unter halogenierten Ethern mit einem Gehalt an 2 bis 4 Kohlenstoffatomen und deren Gemischen ausgewählt ist.

11. Verfahren nach Anspruch 10, dadurch gekennzeichnet, daß das Halogenierungsmittel unter Dipentachlorethylether, Ditrichlormethylether, deren bromierten Homologen und deren Gemischen ausgewählt ist.

12. Verfahren nach einem der Ansprüche 1 bis 11, dadurch gekennzeichnet, daß der nicht-reduzierende gasförmige Träger unter Stickstoff, Kohlendioxid, Sauerstoff und deren Gemischen ausgewählt ist.

13. Verfahren nach einem der Ansprüche 1 bis 12, dadurch gekennzeichnet, daß der Kontakt während einer Zeitspanne stattfindet, die ausreicht, um 0,1 bis 1 Gew.-% des Halogens am TEA-Silicat zu fixieren.

14. Kristallines, polymorphes Siliciumdioxid vom TEA-Silicat-Typ zur Katalyse der Umsetzung von Kohlenwasserstoffen, dadurch gekennzeichnet, daß es gemäß dem Verfahren nach einem der Ansprüche 1 bis 13 stabilisiert worden ist.

## Claims

1. Process for stabilizing the activity of crystalline silica polymorph of the TEA-silicate type used as hydrocarbons conversion catalyst, characterized in that it consists of:
a) halogenating said TEA-silicate by contacting it with a gaseous stream comprising:
(i) an halogenation agent selected from the group comprising the organic saturated aliphatic chlorinated compounds, the organic saturated aliphatic brominated compounds, the organic saturated aliphatic fluorinated compounds and mixtures thereof, having a vapor pressure of at least 13 kPa at a temperature of 200 to 230°C and having an halogen/carbon atomic ratio equal to or higher than 1; and
(ii) a non-reducing gaseous vehicle;
at a temperature comprised between 200 and 500°C and during a period of time sufficient to fix from 0.1 to 5% by weight of halogen on the TEA-silicate;
b) recovering or using the so-formed stabilized and halogenated TEA-silicate.

2. A process according to Claim 1 wherein the halogenation agent is selected from the group comprising the organic saturated chlorinated aliphatic compounds, the organic saturated brominated aliphatic compounds and mixtures thereof.

3. A process according to Claim 2 wherein the halogenation is carried out at a temperature between about 250 and 300°C.

4. A process according to Claim 1 wherein the halogenation agent is selected from the group of the organic saturated fluorinated aliphatic compounds and mixtures thereof.

5. A process according to Claim 4 wherein the halogenation is carried out at a temperature comprised between about 450 and 500°C.

6. A process according to any one of Claims 1 to 5, wherein the halogenation agent has a vapor pressure higher than 40 kPa at a temperature comprised between 200 and 230°C.

7. A process according to Claim 6 wherein the halogenation agent has a vapor pressure comprised between about 40 and about 53 kPa at a temperature comprised between 200 and 230°C.

8. A process according to any one of Claims 1 to 7, wherein the halogenation agent is selected from the halogenated paraffins having from 1 to 4 carbon atoms, and mixtures thereof.

9. A process according to any one of Claims 1 to 8, wherein the halogenation agent is selected form the group comprising carbon tetrachloride, carbon tetrabromide, carbon tetrafluoride, chloroform, bromoform, fluoroform, hexachloroethane, pentachloroethane and difluoromethane.

10. A process according to any one of Claims 1 to 7, wherein the halogenation agent is selected from the halogenated ethers containing from 2 to 4 carbon atoms, and mixtures thereof.

11. A process according to Claim 10, wherein the halogenation agent is selected from the group comprising di-pentachloroethyl ether, di-tri-chloromethyl ether, their brominated homologs and mixtures thereof.

12. A process according to any one of Claims 1 to 11 wherein the non-reducing gaseous vehicle is selected from the group comprising nitrogen, carbon dioxide, oxygen and mixtures thereof.

13. A process according to any one of Claims 1 to 12 wherein the contact is carried out during a period of time sufficient to fix from about 0.1 to 1% by weight of halogen on the TEA-silicate.

14. Crystalline silica polymorph of the TEA-silicate type used to catalyse the conversion of hydrocarbons, characterized by being stabilized by the process disclosed in any one of Claims 1 to 13.